(19) Europäisches Patentamt
European Patent Office
Office européen des brevets

(11) **EP 2 721 747 B1**

(12) **FASCICULE DE BREVET EUROPEEN**

(45) Date de publication et mention
de la délivrance du brevet:
**29.11.2017 Bulletin 2017/48**

(51) Int Cl.:
***H04B 7/185*** (2006.01)

(21) Numéro de dépôt: **12731332.8**

(22) Date de dépôt: **13.06.2012**

(86) Numéro de dépôt international:
**PCT/EP2012/061158**

(87) Numéro de publication internationale:
**WO 2012/171937 (20.12.2012 Gazette 2012/51)**

(54) **DISPOSITIF ET PROCÉDÉ D'OPTIMISATION DE LA COUVERTURE AU SOL D'UN SYSTÈME SPATIAL HYBRIDE**

VORRICHTUNG UND VERFAHREN ZUR OPTIMIERUNG DER BODENABDECKUNG EINES HYBRIDEN RAUMSYSTEMS

DEVICE AND METHOD FOR OPTIMIZING THE GROUND COVERAGE OF A HYBRID SPACE SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.06.2011 FR 1101853**

(43) Date de publication de la demande:
**23.04.2014 Bulletin 2014/17**

(73) Titulaire: **Airbus Defence and Space SAS**
**31402 Toulouse Cedex 4 (FR)**

(72) Inventeurs:
• **TRONC, Jérôme**
**31240 Saint Jean (FR)**
• **DUNAT, Jean-Christophe**
**31000 Toulouse (FR)**

(74) Mandataire: **Ipside**
**6, Impasse Michel Labrousse**
**31100 Toulouse (FR)**

(56) Documents cités:
**EP-A2- 0 771 085      US-B1- 6 252 562**

## Description

L'invention relève du domaine des systèmes de transmission de données à grande distance. Elle concerne plus particulièrement les systèmes et procédés de communications de données (transfert de donnée, télécommande, suivi de terminaux...) entre des utilisateurs dotés de petits terminaux mobiles.

## Contexte de l'invention et problème posé

La question de la transmission de données à grande distance depuis ou vers un terminal mobile, se pose en particulier pour les liaisons entre ordinateurs (machine to machine). Ce domaine de transmission est alors caractérisé par un besoin de débit de données nettement plus faible que pour des liaisons de type image ou Internet, ou alternativement par la capacité à utiliser une liaison intermittente plutôt que continue.

Le satellite sert alors de lien de communication entre les deux parties, et le temps de latence des accusés de réception et des messages est fonction de la distance entre le satellite et la station sol (GES de l'anglais Gateway Earth Station).

Cependant, la couverture fournie par le réseau de stations sol des systèmes utilisant des satellites en orbite basse, tels qu'Orbcomm (marque déposée) et Argos (marque déposée), est limitée par le déploiement de stations sols (GES) et les systèmes existants fournissent seulement une couverture limitée de la Terre dans ce mode. Chaque station sol permet en effet une couverture sur un rayon d'environ 3000 km, et chacun de ces systèmes comporte une vingtaine de stations sol.

On constate alors aisément que les zones de couvertures présentent de larges zones "blanches" pour lesquelles le système n'est pas utilisable. Ces zones couvrent en particulier une large part des zones océaniques, voire une partie significative de zones continentales telles que l'Afrique ou l'Australie.

Dans les cas pour lesquels le satellite LEO n'a pas de visibilité simultanée du terminal utilisateur et de la station de contrôle sol (GES), il est nécessaire d'utiliser une méthode de communication de type stockage et envoi (méthode connu de l'homme de l'art sous le nom Store & Forward). Dans cette méthode, le message est stocké à bord du satellite, qui continue son déplacement sur son orbite jusqu'à ce qu'il survole la station sol GES à laquelle il délivre le message stocké.

Avec cette méthode d'opérations, les délais de communications sont longs et rendent difficiles des communications bidirectionnelles dans des conditions acceptables, étant donné que les délais sont typiquement compris entre quelques minutes et les 100 à 150 minutes de durée d'une orbite complète du satellite LEO.

On connait par ailleurs des exemples de systèmes de télécommunications hybrides pour la transmission de données entres utilisateurs. Ces systèmes hybrides sont composés de satellites géostationnaires et d'une constellation de satellite en orbite basse.

On peut citer notamment un premier document brevet FR 2764755 / US 6208625 : *Method and apparatus for increasing call-handling capacity using a multi-tier satellite network*

Ce document décrit un réseau formé de satellites LEO et géostationnaires (GEO) capables de communiquer entre eux. Au sol, des terminaux utilisateurs sont capables de réception / transmission (Rx/Tx) avec les satellites LEO et GEO. La composante LEO réalise un filtrage du trafic reçu depuis les terminaux, et en fonction de l'aspect urgent du trafic reçu, elle aiguille ce trafic soit en interne vers le LEO soit vers le GEO.

Dans un second document de brevet, EP 0883252 / US 6339707 : *Method and system for providing wideband communications to mobile users in* a *satellite-based network,* il est proposé un système de communication par satellite permettant une couverture globale, une réduction du délai de transmission (Tx), et une maximisation de l'utilisation de la capacité du système (communication satellite large bande par l'interconnexion de plusieurs constellations en orbite moyenne -MEO- et géostationnaire -GEO-).

Les satellites MEO et GEO communiquent directement entre eux par des liens inter-satellites, ce qui permet un routage du trafic (pour la voix et pour les données) à bord des satellites en fonction de certaines règles.

En outre, ce document propose un partage et une réutilisation du spectre entre les satellites GEO et MEO à très hautes fréquences (par exemple entre 40 et 60 GHz), afin de permettre la fonction connue sous le nom de "seamless handover" pour les terminaux portables (passage d'un réseau mobile à un réseau fixe sans interruption de communication en cours).

Il est clair que les systèmes hybrides actuels présentent une grande complexité, synonyme de coût élevé de mise en place et d'utilisation.

Le problème posé par ce type de service est qu'il est souhaitable d'offrir un service de qualité à un prix très réduit pour les utilisateurs, ce qui implique une réduction du coût du système, sans en dégrader ses performances.

Or le prix du segment spatial dans ce type de systèmes peut être significatif, surtout si les satellites utilisés sont complexes et/ou nombreux. Il faut donc maximiser la directivité et le bilan de liaison offert aux utilisateurs sur toute la surface terrestre à l'aide de satellites les moins complexes

EP-A-771 085 décrit un satellite transmettant avec un sous-faisceau elliptique, l'axe majeur du sous-faisceau étant orthogonal au vecteur vitesse du satellite.

US-B1-6 252 562 décrit un satellite transmettant avec un faisceau elliptique, l'axe majeur du faisceau étant parallèle au vecteur vitesse du satellite.

## Objectifs de l'invention

Un objectif de l'invention est de fournir une solution basée sur des satellites répéteurs le plus simple possible, offrant de bonnes performances (bilan de liaison, disponibilité) au sein de la couverture de chaque satellite.

## Exposé de l'invention

A cet effet, l'invention vise en premier lieu un système de télécommunications, destiné au transfert intermittent de données de et vers au moins un utilisateur situé sensiblement à la surface d'un corps céleste,

le système comprenant :

> au moins un terminal émetteur / récepteur REC de surface associé à chaque utilisateur,
> un ou plusieurs moyens de répétition de signaux pour des signaux émis et/ou reçus depuis les terminaux de surface REC, ces moyens de répétition défilant au dessus de la surface du corps céleste,
> chaque moyen de répétition défilant comportant au moins une antenne orientée vers la surface du corps céleste, et adaptée à permettre les communications de et vers des terminaux de surface REC, chaque antenne déterminant un faisceau d'émission / réception, dont la trace à la surface du corps céleste forme la trace au sol, le balayage progressif de la surface par cette trace au sol déterminant une bande dite fauchée,
> le système comporte des moyens dits moyens de réduction de longueur de la trace active, adaptés à ce qu'en chaque point P de la fauchée du moyen de répétition défilant, et à chaque passage de celui-ci, la durée totale de couverture (selon la ligne de défilement) par au moins une antenne active du moyen de répétition défilant, détermine une longueur $L_{ac}(P)$ dite longueur active de communication, dont la valeur moyenne $L_{ac}$ sur la largeur de la fauchée, soit nettement inférieure à la largeur $l_f$ de ladite fauchée (selon un axe perpendiculaire à la ligne de défilement).

Dans toute la présente demande, on entend par **"utilisateurs situés sensiblement à la surface",** notamment les utilisateurs terrestres, maritimes ou aéronautiques. De même, les terminaux de surface sont admis être par exemple placés dans des moyens terrestres, maritimes ou aéronautiques.

On entend par **"moyen de répétition défilant"** notamment mais non limitativement un satellite en orbite basse terrestre LEO.

On entend par **"durée totale de couverture, (selon la ligne de défilement) par au moins une antenne active du moyen de répétition défilant",** la durée totale d'illumination du terminal sol par les diverses antennes du moyen de communication défilant.

Une mission de transmission de données par satellite pour des applications de type machine-à-machine (donc a priori intermittentes) entraîne un cahier des charges spécifique à prendre en compte dans la réduction de la complexité de la charge utile :

- Bilan de liaison du satellite à optimiser

- Pas de nécessité d'une couverture continue dans le temps

- Nécessité de minimiser le délai de revisite (défini comme le délai entre deux survols du terminal par des satellites de la constellation)

Pour satisfaire aux exigences de la mission, la présente invention envisage de maximiser la directivité de l'antenne satellite tout en offrant une couverture suffisante pour minimiser le délai de revisite.

Selon un mode de réalisation avantageux, les moyens de réduction de la longueur de trace active comprennent, pour au moins un moyen de répétition défilant, des antennes orientées vers le sol, dont les faisceaux sont tels que la longueur au sol de chaque faisceau, égale à la longueur active de communication dans ce cas, soit nettement inférieure à la largeur de la fauchée (selon l'axe perpendiculaire au défilement).

Plus particulièrement, la trace au sol agrégée de l'ensemble des faisceaux d'émission / réception du moyen de répétition présente une longueur, mesurée selon la direction de défilement du moyen défilant, inférieure à sa largeur, mesurée selon une direction perpendiculaire à la direction de défilement du moyen défilant.

On comprend que les faisceaux ne sont pas nécessairement alignés sur une même ligne perpendiculaire à la ligne de défilement mais peuvent au contraire être décalés l'un par rapport à l'autre, selon la direction de défilement. La longueur de chaque faisceau reste cependant très inférieure à la largeur de la trace au sol. De la sorte, vu de chaque point au sol, la longueur de la trace au sol est effectivement très inférieure à sa largeur totale, éventuellement égale à la largeur de la fauchée.

Selon un mode de réalisation encore plus particulier, la largeur de la trace au sol agrégée est supérieure ou égale à trois fois la longueur de ladite trace au sol.

Avantageusement, le moyen de répétition défilant comporte une antenne dont le faisceau forme une trace au sol elliptique de largeur nettement supérieure à sa longueur.

Alternativement, le moyen de répétition défilant comporte au moins deux antennes dont les faisceaux balayent des zones adjacentes de la fauchée, la trace au sol agrégée des traces de chaque faisceau présentant une largeur nettement supérieure à sa longueur.

Selon un autre mode de réalisation, les moyens de réduction de la longueur de trace active comprennent pour au moins un moyen de répétition, au moins deux antennes destinées à des communications vers le sol, et des moyens d'allumage intermittent de chacune de ces antennes.

Selon un mode préféré de réalisation, le système comporte au moins une station sol de connexion (GES) d'un moyen stationnaire GEO restant en permanence en vue de la même zone du sol. Les communications entre le sol et les moyens de répétitions spatiaux sont assurés par l'intermédiaire des moyens stationnaires GEO et des stations de connexion GES de ces moyens stationnaires GEO. Ces communications comprennent à la fois les échanges de données entre utilisateurs et potentiellement les communications de télécommande et de télémesure des moyens de répétition spatiaux. Ce mode de réalisation ne nécessite donc pas l'utilisation de station sol de connexion affectée aux moyens de répétition spatiaux.

Selon une mise en oeuvre préférée, au moins un moyen stationnaire est embarqué sur un satellite en orbite géostationnaire autour du corps céleste.

De même, préférentiellement, au moins un moyen de répétition est embarqué sur un satellite en orbite basse défilante autour du corps céleste.

En d'autres termes, l'invention vise notamment un système de communications de données à distance entre mobiles, le système utilisant des charges utiles embarquées sur un ou plusieurs satellites géostationnaires et sur une constellation de satellites en orbite basse défilante, dans lequel les satellites en orbite défilante agissent comme des répéteurs spatiaux pour les signaux émis et/ou reçus depuis les satellites géostationnaires.

La constellation de satellites en orbite basse défilante, agissant comme répéteurs spatiaux peut être dans une mise en oeuvre préférée une constellation LEO (Low Earth Orbit) ou alternativement une constellation MEO (Médium Earth Orbit).

Dans une mise en oeuvre avantageuse, au moins un moyen de répétition est embarqué sur un satellite évoluant en orbite polaire ou quasi-polaire (inclinaison de l'orbite supérieure à 70°) autour du corps céleste.

Une orbite polaire permet d'améliorer la couverture des zones de latitude élevée qui ne peuvent pas être desservies dans de bonnes conditions par un satellite géostationnaire.

L'invention vise sous un second aspect un procédé de télécommunication, destiné au transfert de données à bas débit entre deux utilisateurs, situés sensiblement à la surface d'un corps céleste, le premier utilisateur étant doté d'un terminal utilisateur, en vue d'au moins un moyen de répétition et le moyen de répétition étant en vue d'au moins un moyen stationnaire, le procédé utilisant un système de télécommunications tel qu'exposé,

le procédé comprenant notamment des étapes dans lesquelles :

- le terminal du premier utilisateur émet un premier signal montant, représentatif des données à transmettre, vers le moyen de répétition,

- le moyen de répétition, reçoit et amplifie le premier signal émis par le terminal utilisateur au sol et le transmet sous forme d'un second signal montant vers le moyen stationnaire dans la même bande de fréquence, le moyen stationnaire assurant la bonne transmission finale des données à transmettre vers le second utilisateur.

L'invention vise également un procédé de télécommunication, destiné au transfert de données à bas débit entre deux utilisateurs, situés sensiblement à la surface d'un corps céleste, le second utilisateur étant doté d'un second terminal utilisateur en vue d'au moins un moyen de répétition et le moyen de répétition étant en vue d'au moins un moyen stationnaire, le procédé utilisant un système de télécommunications tel qu'exposé,

le procédé comprenant notamment des étapes dans lesquelles :

- le moyen stationnaire retransmet un signal, représentatif des données à transmettre, reçu d'un premier utilisateur, vers le moyen de répétition sous forme d'un premier signal descendant,

- le moyen de répétition, reçoit et amplifie le premier signal descendant émis par le moyen stationnaire, et le transmet au terminal du second utilisateur au sol dans la même bande de fréquence sous forme d'un second signal descendant.

On comprend que les deux parties du procédé peuvent être utilisées conjointement.

Préférentiellement, la réutilisation des fréquences entre les différentes composantes du système de communications est réalisée de manière coordonnée pour minimiser les interférences intra-système.

L'invention vise également un procédé de télécommunication, destiné au transfert de données intermittent de et vers au moins un utilisateur, situé sensiblement à la surface d'un corps céleste, l'utilisateur étant doté d'un terminal utilisateur, en vue d'au moins un moyen de répétition défilant au dessus de la surface du corps céleste, le procédé utilisant un système de télécommunications tel qu'exposé,

le procédé comprenant de façon itérative des étapes suivantes :

100. choix d'au moins une antenne à allumer,

200. transmission de ou vers le terminal utilisateur pendant une période, appelée période d'allumage,

300. extinction d'au moins une antenne.

Préférentiellement, dans l'étape 100, le choix d'un faisceau à allumer est réalisé de façon régulière, pendant un temps proportionnel au nombre d'antennes orientées vers le sol.

Alternativement, dans l'étape 100, le choix d'un faisceau à allumer dépend de la zone qui est survolée par le satellite, selon une logique prédéterminée dépendant du type de zone survolée.

Selon un mode de mise en oeuvre particulier, dans l'étape 200, la durée de la période d'allumage varie selon un critère prédéterminé.

Alternativement, la période d'allumage est liée à des données pré-mémorisées de volume de communications constatée sur chaque zone au sol lors dune période antérieure.

Dans un mode de mise en oeuvre préféré, dans l'étape 200, une seule antenne est allumée à la fois.

Selon un mode de réalisation avantageux, la séquence des antennes activées suit un balayage dans une direction prédéterminée avant de revenir à l'antenne du début lorsque la dernière antenne de la fauchée a été allumée.

Dans une variante de réalisation, la suite des antennes activées suit une alternance entre une antenne large couvrant tout l'angle de vue du satellite et des antennes déterminant des faisceaux plus étroits.

Dans une autre variante, éventuellement utilisée en conjonction, le procédé comporte une étape dans laquelle, lorsque le moyen de répétition défilant est situé au-dessus des zones polaires du corps céleste, on utilise le faisceau le plus large et dans le reste de trajet du moyen de répétition défilant, on utilise les antennes déterminant des faisceaux plus étroits.

L'invention vise sous d'autres aspects un moyen de répétition et un terminal utilisateur pour système de communications tel qu'exposé.

Les caractéristiques préférentielles ou particulières, et les avantages de ce moyen de répétition et de ce terminal utilisateur étant identiques à ceux du système tel que succinctement exposé ci-dessus, ces avantages ne sont pas rappelés ici.

**Brève description des figures**

Les buts et avantages de l'invention seront mieux compris à la lecture de la description et des dessins d'un mode particulier de réalisation, donné à titre d'exemple non limitatif, et pour lequel les dessins représentent :

- figure 1 : l'architecture générale du système ;
- figure 2 : illustration des positions des satellites LEO et GEO sur un planisphère, à un instant donné ;
- figure 3 : un tableau des ordres de grandeur de délais entre les signaux d'un satellite GEO et d'un satellite LEO pour différentes altitudes d'orbites LEO ;
- figure 4 : les zones de couverture des satellites LEO et GEO de la constellation décrite ;
- figure 5 : une illustration de la forme de la trace au sol pour un faisceau aplati selon l'invention ;
- figure 6 : une illustration de la forme de la trace au sol d'une fauchée de faisceaux selon l'invention.

**Description détaillée d'un mode de réalisation de l'invention**

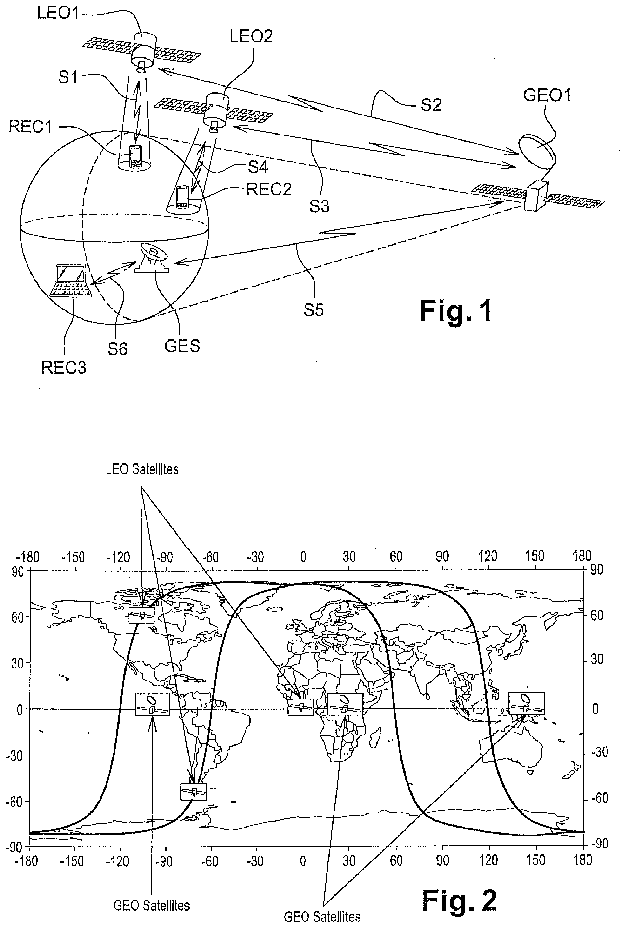

L'architecture du système est illustrée par les figures 1 et 2. Comme on le voit sur ces figures, le système proposé utilise deux constellations de satellites. La première constellation est composée d'un ou plusieurs satellites géostationnaires (également appelés GEO dans la suite de la description).

Le système décrit à titre d'exemple nullement limitatif, est basé sur une constellation de trois satellites géostationnaires GEO1, GEO2, GEO3 placés en orbite géostationnaire au dessus des trois zones continentales principales (par exemple aux longitudes 265°E, 25°E, 145°E respectivement, tel qu'illustré figure 2). Les satellites géostationnaires GEO1, GEO2, GEO3 opèrent dans la bande dite MSS L (1.5/1.6 GHz).

La constellation des satellites géostationnaires GEO1, GE02, GE03 est contrôlée par une ou plusieurs stations de contrôle terrestres, disposées en vue des satellites géostationnaires GE01, GE02, GEO3 qu'elles contrôlent, lesquelles effectuent les fonctions de contrôle et télécommande. La constellation des satellites géostationnaires GEO1, GEO2, GEO3 est connectée aux réseaux de télécommunication terrestre par une ou plusieurs stations de connexion terrestres GES, disposées en vue des satellites géostationnaires GE01, GE02, GEO3 via un lien FL (de l'anglais Feeder Link), de façon connue en soi.

Le système est complété par une seconde constellation de trois satellites défilants en orbite basse ou moyenne (satellites dits LEO ou MEO), avec des orbites d'altitudes comprises typiquement entre 400 et 20000 km, agissant comme répéteurs spatiaux. Il est clair que le système peut utiliser un nombre plus grand ou plus faible de satellites dans chacune des constellations LEO et géostationnaire, la différence étant une couverture de la Terre plus ou moins complète.

Dans l'exemple décrit ici à titre non limitatif, "les satellites défilants sont supposés de type évoluant en orbite basse (dite LEO), et placés en orbite héliosynchrone à une altitude de 567 km avec une inclinaison de 97.7° dans trois plans orbitaux différents (avec des ascensions droites du noeud ascendant à 0°, 60° et 120°). On rappelle que l'orbite héliosynchrone est définie par le fait que chaque satellite repasse, après plusieurs orbites, en vue d'un même point de la Terre à la même heure solaire locale. Le présent système utilise trois satellites en orbite basse : LEO1, LE02, LE03, dont les traces des orbites sont illustrées sur la figure 2 à titre d'exemple nullement limitatif. Dans cet exemple, ces trois satellites en orbite basse LEO1, LEO2, LEO3, pourraient être des charges utiles embarquées en "passager" sur des satellites dont la charge utile principale est dédiée à une autre mission telle que, par exemple, l'observation de la Terre.

Il est clair que la constellation de satellites défilants LEO1, LE02, LE03, peut comprendre des satellites évoluant sur des orbites d'altitudes ou d'inclinaisons différentes.

Ces satellites en orbite basse LEO1, LEO2, LE03, opèrent dans la même bande de fréquences que les satellites géostationnaires GE01, GEO2, GEO3, et dans le cas présent, dans la bande MSS L (1.5 / 1.6 GHz).

Le système de communication s'adresse à tout utilisateur, notamment mobile à la surface de la Terre, et doté d'un terminal d'émission / réception REC1, émettant ou recevant des données de ou vers un autre utilisateur, éventuellement lui-même doté d'un terminal d'émission / réception REC2, et également éventuellement mobile à la surface de la Terre. L'utilisateur REC3 peut également être connecté à un réseau terrestre (IP, PSTN, ...) et être connecté à l'utilisateur REC1 via la GES.

Chaque terminal utilisateur REC1 et REC2, est un terminal transportable, comportant notamment une interface utilisateur, par exemple de type clavier, écran tactile ou liaison de données vers un équipement électronique, une batterie et / ou des moyens d'alimentation, un processeur et / ou une électronique de contrôle, des moyens de mémorisation de programmes ou de données, et des moyens d'émission et de réception de signaux, fonctionnant dans la bande de fréquence MSS L, dans le présent exemple décrit ici à titre nullement limitatif.

Chaque terminal utilisateur REC1 et REC2, est doté dans le présent exemple d'une antenne omnidirectionnelle, adaptée à recevoir des signaux émanant indifféremment d'un quelconque des satellites en orbite basse LE01, LE02, LEO3, ou d'un quelconque des satellites en orbite géostationnaire GEO1, GEO2, GEO3.

Dans la mise en oeuvre décrite ici à titre d'exemple, chaque terminal utilisateur REC1 et REC2, comporte pour la voie aller un récepteur de type « Rake », bien connu de l'homme de l'art. On rappelle qu'un récepteur Rake est un récepteur radio, conçu originellement pour compenser l'atténuation due aux trajets multiples d'ondes radio pour les systèmes terrestres. Il est basé sur le concept que les signaux réfléchis peuvent être distingués (typiquement dans le cas d'une utilisation d'une technique de multiplexage CDMA) et ainsi peuvent être combinés de façon adaptée en tirant alors avantage des multiples propagations. Pour la voie retour, les satellites GEO sont supposés transparents et le récepteur Rake est positionné au niveau des GES (stations de connexion des satellites GEO).

Il est cependant à noter que, dans le cas où les satellites GEO seraient de type régénératifs, il serait nécessaire qu'ils embarquent un récepteur Rake (en remplacement du récepteur placé au niveau de la GES)."

Une communication entre deux terminaux utilisateurs REC1, REC2, supposés en vue de deux satellites en orbite basse LEO1, LEO2 respectivement, et d'un même satellite géostationnaire GE01, comporte plusieurs étapes, ainsi que schématisé sur la figure 1 :

- le premier terminal utilisateur REC1 émet un premier signal S1 vers le premier satellite en orbite basse LEO1,

- le satellite en orbite basse LEO1, reçoit et amplifie le signal S1 émis par le terminal utilisateur REC1 au sol et le transmet sous forme de signal S2 vers le satellite géostationnaire GE01,

- le satellite en orbite géostationnaire GEO1 reçoit le signal S2 et si les conditions le permettent le signal S1 et les retransmets sous forme de signal S3 vers le second satellite en orbite basse LEO2, soit directement (avec un routage à bord du satellite) soit par l'intermédiaire de la station de connexion GES. Les signaux S1 et S2 sont traités au moyen d'un récepteur Rake soit à bord (dans l'hypothèse d'un routage bord) soit au niveau de la station GES (cette solution est préférée pour des raisons de simplification de l'implémentation).

- le satellite en orbite basse LEO2, reçoit et amplifie le signal S3 émis par le satellite en orbite géostationnaire GE01 et le transmet sous forme de signal S4 au terminal utilisateur REC2 au sol.

- le terminal utilisateur REC2 reçoit le signal S4 et potentiellement le signal S3 si les conditions le permettent. Un récepteur Rake permet de recombiner ces deux signaux au niveau du terminal utilisateur.

Dans un cas impliquant des terminaux utilisateurs en vue de deux satellites géostationnaires différents GE01, GEO2, le lien entre les deux terminaux utilisateurs comporte en outre un segment de communication entre ces satellites, par exemple mais de façon non limitative, par l'intermédiaire des stations de connexion GES et de liens sol ou par l'intermédiaire d'un lien direct inter-satellite GEO, s'il existe.

On comprend naturellement qu'il est également envisageable de réaliser une communication d'un utilisateur REC1 disposant d'un terminal émetteur / récepteur mobile, avec un autre utilisateur REC3 connecté au travers d'un réseau de télécom terrestre « classique » (PSTN, IP, ...) via la station de connexion GES.

Dans ce cas :

- le premier terminal utilisateur REC1 émet un premier signal S1 vers le premier satellite en orbite basse LEO1,

- le satellite en orbite basse LEO1, reçoit et amplifie le signal S1 émis par le terminal utilisateur REC1 au sol et le transmet sous forme de signal S2 vers le satellite géostationnaire GEO1,

- le satellite en orbite géostationnaire GE01 reçoit le signal S2 et potentiellement le signal S1 et le retransmets sous forme de signal S5 vers la station de connexion GES.

- la station de connexion GES reçoit le signal S5, (en combinant lorsque cela est nécessaire les signaux S1 et S2 contenus dans S5 au moyen d'un récepteur Rake) et le transmet sous forme de signal S6 au terminal utilisateur REC3 au sol via un réseau terrestre classique.

On note que, sur la figure 1, les liens directs entre les terminaux utilisateurs REC1, REC2 et REC3 et le satellite géostationnaire GE01 ne sont pas figurés afin de simplifier la figure.

Différentes approches peuvent être envisagées pour le répéteur spatial embarqué sur un satellite en orbite basse LE01, LE02, LEO3:

> Soit, préférentiellement, une simple amplification sans translation de fréquence du signal reçu du satellite géostationnaire GEO. Cependant, ceci implique l'utilisation d'une interface air capable de supporter l'arrivée de deux signaux comportant quelques différences de délai et de Doppler. C'est par exemple le cas d'une interface air de type CDMA -Code Division Multiple Access-associée à un récepteur Rake.

> Soit, alternativement, l'utilisation de deux signaux distincts (un pour le satellite GEO et un pour le satellite LEO). Il est par exemple possible d'utiliser une interface air de type TDMA (Time Division Multiple Access), connue en soi, en envisageant soit un multiplexage temporel pour répartir la capacité entre les satellites LEO et GEO (avec des intervalles de garde et une pré-compensation du Doppler au niveau du satellite défilant LEO), ou l'utilisation de deux sous-canaux (un pour le satellite GEO et un pour le satellite LEO).

Dans la mise en oeuvre décrite ici à titre d'exemple, la première approche a été sélectionnée car elle offre une solution simple et efficace.

Elle exploite en effet la diversité des satellites puisque les signaux venant tant des satellites LEO que GEO peuvent être combinés dans un récepteur Rake pour obtenir un meilleur rapport signal sur bruit. Cette technique, d'amélioration du rapport signal sur bruit, permet d'obtenir un taux d'erreur de transmission ("bit error rate") plus bas, une plus faible puissance transmise EIRP (Effective Isotropically Radiated Power), ou une plus grande marge dans le bilan de liaison.

Par ailleurs, pour un terminal utilisateur REC1, en vue simultanément d'un satellite en orbite basse LE01 et d'un satellite géostationnaire GE01, si les conditions de propagation entraînent la perte d'un lien vers l'un des satellites sur lesquels il est connecté (en raison de l'évolution de la géométrie du lien avec le LEO variant en fonction du temps, ou en raison d'obstacles dans la ligne de visée de l'un des deux satellites LE01 et GE01), l'autre lien peut permettre de maintenir la communication.

Ce concept de simple amplification sans translation de fréquence du signal reçu du satellite GEO, peut être mis en oeuvre grâce à la possibilité offerte par le récepteur Rake, inclus dans le terminal utilisateur REC1, REC2, de combiner différents signaux venant des différents chemins en provenance d'un satellite en orbite basse LEO et d'un satellite en orbite géostationnaire GEO.

Dans le scénario de communications de données par satellite, qui fait l'objet de la présente mise en oeuvre, la composante multi-trajets est généralement négligeable. Dans ce cas, le récepteur Rake est utilisé simplement pour combiner plusieurs signaux directs en provenance de plusieurs satellites LEO et GEO, puisque les différents signaux peuvent être considérés comme des composants de "trajets multiples" fictifs.

Les signaux reçus peuvent alors être combinés dans le terminal utilisateur REC1, REC2 selon trois algorithmes principaux, connus de l'homme de l'art et donc non décrits plus avant ici : par sélection du meilleur signal (connu sous le terme anglais de « selection combining »), par simple combinaison égale des signaux (connu sous le terme anglais de « equal gain combining »), ou recombinaison pondérée des signaux pour maximiser le rapport signal à bruit total (connu sous le terme anglais de « maximal ratio combining »). Le dernier algorithme (Maximum Ratio Combining) est la solution préférée car il est le plus performant en termes de rapport signal à bruit obtenu.

Une des questions essentielles liées à la combinaison de signaux est que chaque voie suivie a une longueur éventuellement très différente en raison de la position relative des éléments : utilisateur - satellite LEO - satellite GEO. Afin d'équilibrer la différence de temps de propagation, qui varie également dans le temps, des buffers de données appropriés doivent être prévus au niveau du récepteur Rake. Le dimensionnement de ces buffers dépend de la différence de délai dans le pire cas entre les différents chemins, et du débit maximum de transfert de données utilisé.

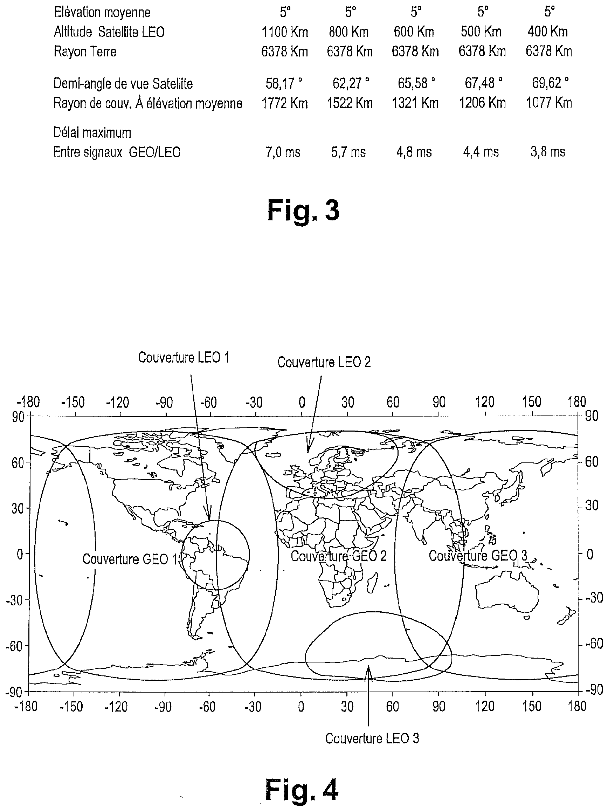

Dans le système proposé, la différence de temps reste inférieure à 5 ms pour la constellation de satellites défilants LEO1, LE02, LE03 envisagée. Le tableau de la figure 3 donne quelques ordres de grandeur de délais pour différentes altitudes d'orbites LEO par rapport à un satellite GEO.

Il convient également de noter que les services de communication envisagés pour le système selon l'invention, sont des transmissions à faible débit de données. De ce fait, la taille du buffer de données nécessaire reste raisonnable.

Avec cette approche utilisant un récepteur Rake, dans le cas d'une technique de multiplexage CDMA, les satellites LEO et GEO partagent bien la même bande de fréquence (bande MSS L dans le présent exemple) sans générer d'interférences dommageables.

La planification des fréquences et les questions de couverture doivent également être prises en considération, puisque les zones de couverture LEO et GEO doivent être coordonnées pour assurer un fonctionnement correct du système. Dans l'approche proposée, la couverture des satellites GEO est composée d'un faisceau global couvrant l'intégralité de la surface visible de la Terre. Cette approche permet d'éviter ou de limiter les procédures de transfert pour les satellites LEO (connues par l'homme de l'art sous le terme « hand over ») entre différents faisceaux provenant d'un (ou plusieurs) satellites GEO. La couverture LEO est donc incluse dans la couverture du GEO comme l'illustre la figure 4. Les satellites LEO relaient donc simplement les signaux des satellites GEO sous lesquels ils sont situés.

Dans l'exemple ci-dessus:

> Le satellite LE01 relaie les signaux de et vers le satellite GE01.

> Les satellites LE02 et LEO3 relaient les signaux de et vers le satellite GEO 2.

> Il n'y a pas de satellite LEO dans la couverture du satellite GEO3 à l'instant illustré par la figure 4. En fait, le satellite LE03 est, à ce moment, connecté au satellite GEO2.

Au fur et à mesure qu'un satellite LEO quelconque se déplace dans la zone de couverture des satellites GEO, il peut être en visibilité de différents satellites GEO. Toutefois, on suppose qu'à un instant donné il est connecté à un satellite géostationnaire unique. Lorsque plusieurs satellites GEO sont dans la zone de visibilité des satellites défilants LEO, différentes stratégies peuvent être adoptées pour le choix du satellite GEO auquel le LEO doit se raccrocher (par exemple sur un critère du meilleur signal reçu au niveau du satellite LEO, ou un critère géométrique de minimisation de la distance entre LEO et GEO qui est prédictible par avance sur la base des éphémérides des satellites). Dans l'exemple ci-dessus le satellite LEO est connecté au satellite GEO fournissant le meilleur signal reçu.

Avec ces hypothèses, il n'est pas nécessaire de concevoir de stratégies complexes de planification de fréquences et tous les satellites (les trois satellites GEO et les trois satellites LEO) peuvent opérer par exemple sur un unique canal CDMA.

Contrairement à l'approche de l'art antérieur de type Orbcomm (marque déposée) ou Argos (marque déposée), le système proposé est en mesure de fournir des communications de données bidirectionnelles, basées sur le fait que le satellite GEO relaie les communications des satellites LEO.

Selon cette approche, dès que le terminal utilisateur REC1, REC2 est dans la zone de couverture d'un satellite défilant LEO1, LEO2, LEO3, il est possible de communiquer de façon bidirectionnelle et en temps réel avec lui. Il n'y a plus d'exigence de visibilité simultanée par le satellite défilant LE01, LE02, LE03, du terminal utilisateur REC1, REC2 et d'une station de connexion sol, ce qui permet alors d'envisager une couverture complète de la Terre.

Le délai, pour communiquer avec un terminal utilisateur REC1 au sol est alors uniquement fonction de la fréquence de passage des satellites en orbite défilante LEO1, LEO2, LEO3, qui dépend directement de l'orbite choisie pour ces satellites et du nombre de ces satellites (pouvant aller jusqu'à une couverture continue de l'ensemble de la terre).

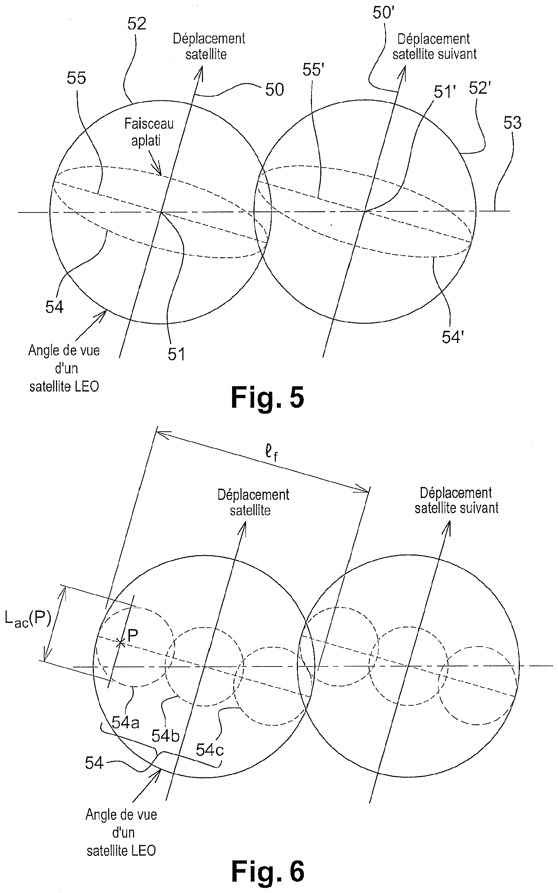

Sur la figure 5, est illustrée une ligne de défilement 50 représentant la projection verticale au sol de l'orbite d'un premier satellite défilant (par exemple de type placé en orbite basse LEO), un parallèle de la Terre étant figuré par la ligne 53. En un point donné 51 de son orbite, le satellite dispose d'un angle de vue formant un faisceau conique, dont la matérialisation au sol est un cercle 52.

Une ligne de défilement 50' est également illustrée, représentant la projection verticale sur le sol de l'orbite d'un second satellite défilant de la même constellation, par exemple un satellite défilant co-orbital du premier satellite considéré. A ce second satellite correspondent également, pour le point 51' d'intersection de son orbite avec le même parallèle 53, un angle de vue matérialisé par un cercle 52'.

Pour réaliser des communications vers les terminaux utilisateurs au sol, chaque satellite défilant de la constellation comporte au moins une antenne orientée vers la surface de la Terre, et adaptée à permettre les communications de et vers des terminaux de surface REC.

Chaque antenne détermine un faisceau d'émission / réception, dont la trace à la surface de la Terre forme la **trace au sol** 54, 54'. La manière de déterminer la forme et la direction de pointage des faisceaux est connue de l'homme du métier des satellites de télécommunications, et n'est donc pas décrite plus avant ici.

La figure 5 présente une conformation de trace au sol 54, 54' de faisceau de satellite défilant, utilisée dans un exemple de mise en oeuvre de la présente invention, qui permet d'augmenter la directivité à partir d'un seul faisceau d'antenne par satellite (en pointillés).

Comme on le voit sur la figure 5, cette trace au sol 54 est ici elliptique et volontairement aplatie selon une direction perpendiculaire au sens de déplacement du satellite défilant.

La largeur $l_f$ de cette trace au sol 54, selon un axe perpendiculaire à la ligne de défilement 50 du satellite défilant, est appelé « **fauchée** » 55 dans la suite de la description. Lors du déplacement du satellite défilant sur son orbite, cette ligne de fauchée 55 balaye une bande au sol à la manière d'une fauchée.

La trace au sol 54 est, par exemple mais non limitativement, trois fois plus étendue dans le sens perpendiculaire à la direction de défilement 50 du satellite défilant, que dans le sens parallèle à la direction de défilement du satellite défilant (sens dit de la longueur). Il est clair que cette valeur d'un facteur trois est donné ici à titre d'exemple. Dans le cas d'une unique trace au sol déterminée par une antenne unique, la trace elliptique est alors telle que son grand axe est environ trois fois plus grand que son petit axe.

Selon un mode alternatif de réalisation de l'invention, illustré par la figure 6, plusieurs faisceaux directifs sont déployés dans l'angle de vue du satellite défilant. Les antennes correspondant à ces faisceaux sont disposées, au sein du satellite, d'une façon qui minimise la complexité de la charge utile.

Pour ce faire, un certain nombre de traces étroites 54a, 54b, 54c sont créées au sol, formant par exemple, mais non limitativement, un alignement perpendiculaire au sens de déplacement du satellite défilant, comme illustré sur la figure 6 dans laquelle les traces sont illustrées en pointillés.

De cette manière, la trace au sol agrégée 54 de l'ensemble des traces étroites 54a, 54b, 54c de ces faisceaux forme une surface plus large que longue (selon les définitions de ces termes données plus haut).

On comprend que, lors d'un passage d'un satellite défilant, tous les points en vue de la fauchée 55 de ce satellite disposent d'un moment de communication avec celui-ci, d'où la nécessité d'une trace la plus large possible, offrant un accès de communication à tout point en vue du satellite.

Par contre, le temps de communication avec le satellite défilant peut être faible, car la transmission n'a pas besoin d'être permanente, mais simplement intermittente, par exemple pour émettre un paquet de données de volume faible à bas débit. Il peut également s'agir d'un volume de données important, avec un débit élevé vers le satellite défilant. Du fait de ce besoin de liaison intermittente et non permanent, il n'est pas nécessaire de maintenir la communication entre le satellite et le terminal utilisateur au sol pendant tout le survol du terminal utilisateur par le satellite défilant.

Une trace au sol de faible longueur, dite longueur active de communication $L_{ac}(P)$, selon la direction de défilement du satellite défilant, est donc suffisante pour satisfaire un besoin de communication intermittente au point P.

On comprend que la longueur active de communication $L_{ac}(P)$ est directement proportionnelle à la durée de survol du point P par une antenne active

Plus généralement, le bilan de liaison du satellite se trouve nettement amélioré dès lors que la valeur moyenne $MOY(L_{ac}(P))$ de cette longueur active de communication en tous points de la fauchée 55 est nettement inférieure à la largeur $l_f$ de cette fauchée 55.

A titre d'exemple dans le cas d'une constellation de satellites LEO en orbite SSO à 680 km d'altitude, la distance D entre deux traces de satellites défilants LEO (définie par la distance à l'équateur entre les lignes centrales de deux fauchées consécutives de satellites de la constellation), est approximativement de 685 km pour 4 satellites défilants LEO par plan (c'est-à-dire quatre satellites se suivant sur une même orbite) et de 910 km pour 3 satellites défilants LEO par plan.

Comme illustré sur les figures 5 et 6, les faisceaux satellites défilant se chevauchent légèrement de façon à assurer que les terminaux utilisateurs situés entre deux faisceaux disposent tous d'une durée minimum de visibilité de l'un ou l'autre satellite défilant, ce minimum étant compatible avec des exigences de qualité du service prédéfinies.

Comparativement à une solution comportant une multitude de faisceaux sous l'angle de vue du satellite défilant, la charge utile de chaque satellite défilant est beaucoup moins complexe. En outre, la réduction de la durée de visibilité d'un satellite défilant induit par l'invention est compensée par un bilan de liaison amélioré ce qui constitue un avantage majeur de l'invention.

Par exemple, en première approximation, la densité de puissance reçue au sol est proportionnelle à la surface de la zone couverte, et donc si la couverture totale au sol représente le tiers de la zone de vue complète la densité de puissance reçue est triple, ce qui constitue un avantage majeur de l'invention.

Par ailleurs, le délai de revisite (délai entre l'accès à deux satellites défilants successifs pour un terminal utilisateur au sol) n'est pas impacté de manière significative dans le cas des satellites à défilement rapide comme cela est le cas des satellites en orbite basse type LEO par exemple.

Le nombre de faisceaux illustré sur la figure 6 n'est pas limitatif de l'invention. En effet, une multitude de faisceaux peuvent être alignés de façon à couvrir la fauchée.

La figure 5 présente la distance D, mesurée en projection horizontale à l'équateur, entre les lignes de défilement de satellites défilants dans le cas d'une constellation de répéteurs spatiaux basée sur des satellites à orbite basse. Elle correspond à la distance, mesurée selon ce parallèle 53, entre les points 51 et 51', lorsque le parallèle 53 considéré est l'équateur.

Le délai $\Delta T$ entre deux points de passage à l'équateur de deux satellites défilants situés sur un même plan orbital est donné par la formule :

$$\Delta T = 2\pi \sqrt{\frac{a^3}{\mu}} * (\Omega 2 - \Omega 1) / 2\pi$$

avec $\Omega 1$ et $\Omega 1$ l'anomalie moyenne (en radians) d'un premier et d'un second satellite, a le demi grand axe de l'orbite, et $\mu$ constante égale au produit de la constante gravitationnelle et de la masse de la Terre.

La distance D entre deux points de passage à l'équateur de deux satellites situés sur une même orbite est donnée par la formule :

$$D = \frac{2\pi \times \mathrm{Re} \times \Delta T}{86164} = \frac{2\pi \times \mathrm{Re} \times \sqrt{\frac{a^3}{\mu}} * (\Omega 2 - \Omega 1)}{86164}$$

Cette formule de calcul de la distance D permet de déterminer quel est le diamètre minimum des faisceaux de la fauchée pour que les couvertures des satellites défilants soient contiguës. Le tableau ci-dessous indique des valeurs typiques pour des satellites défilants évoluant à une altitude de 680 km au-dessus de la surface terrestre et sur des orbites inclinées d'au moins 70° :

Tableau 1 : Exemples de nombre de faisceaux et de satellites défilants par plan

| | 3 satellites/plan | 4 satellites/plan | |
|---|---|---|---|
| Anomalie moyenne | 2.094 | 1.571 | rad |
| T | 1967 | 1475 | s |
| D | 915 | 686 | km |
| Extension angulaire (1/2 angle) minimum de la fauchée d'un satellite | 42 | 30 | ° |

(suite)

| | 3 satellites/plan | 4 satellites/plan | |
|---|---|---|---|
| Elévation minimale à l'intersection des fauchées | 42 | 56 | ° |
| | | | |
| | Diamètre minimium des faisceaux | | |
| 3 faisceaux par satellite | 341 | 242 | km |
| 4 faisceaux par satellite | 254 | 181 | km |
| 5 faisceaux par satellite | 202 | 144 | km |
| | Extension angulaire des faisceaux | | |
| 3 faisceaux par satellite | 28 | 20 | ° |
| 4 faisceaux par satellite | 21 | 15 | ° |
| 5 faisceaux par satellite | 17 | 12 | ° |

Dans ce tableau, on comprend par exemple que, pour 3 satellites défilants sur un même plan orbital à 680 km d'altitude (colonne de gauche en haut), l'écart entre deux passages de satellites est de 1967 secondes (presque 33 minutes). Du fait de la rotation de la terre en 24 heures (exactement un jour sidéral soit 86164 secondes), il en résulte un écart D entre les traces au sol de 915 km (écart entre deux points de passage à l'équateur de deux satellites défilants successifs d'un même plan orbital). Dans ce cas, pour couvrir toute la surface du sol comprise entre ces traces lors d'au moins un des deux passages, il suffit que l'extension angulaire la « fauchée » de chaque satellite défilant soit de 42° (quatrième ligne du tableau). Dans ce cas, l'élévation minimale sous laquelle le satellite défilant est observé depuis un terminal utilisateur est de 42° (cinquième ligne du tableau).

Plus le nombre de satellites par plan est grand, plus l'extension angulaire minimale de la fauchée est faible.

Comme on l'a vu, en pratique, un léger recouvrement des fauchées est recherché, pour avoir un temps de visibilité du satellite défilant satisfaisant par un terminal utilisateur de surface REC (typiquement quelques dizaines de secondes).

Selon un autre mode de réalisation (illustré figure 6), le dispositif selon l'invention combine à la fois un faisceau couvrant tout l'angle de vue 52 du satellite défilant et des faisceaux 54a, 54b, 54c étroits.

Cette disposition présente l'avantage de pouvoir choisir de façon dynamique entre une exigence de couverture totale dans les zones de latitude élevée non couvertes par les satellites géostationnaires GEO (faisceau couvrant tout l'angle de vue du satellite défilant) et une exigence d'amélioration de la directivité tout en gardant une architecture satellite simplifiée (faisceaux étroits disposés selon la fauchée).

Dans une variante de réalisation utilisant un ensemble de faisceaux étroits formant des traces au sol balayant côte à côte la fauchée du satellite défilant, certains de ces faisceaux peuvent être disposés en avant des autres faisceaux, selon la direction de défilement du satellite défilant. Une telle disposition conserve une trace totale la plus large possible, et un temps de visibilité court de chaque terminal utilisateur sol. On a donc bien, ici encore, satisfait encore un bilan de liaison amélioré, et une communication intermittente de tous les points de la fauchée du satellite.

Dans le système décrit plus haut ou la variante décrite ci-dessus, en chaque point P au sol de la fauchée 55 du satellite défilant, et à chaque orbite de celui-ci, la durée totale de couverture (selon l'axe de défilement) par au moins une antenne active du moyen de répétition défilant, détermine une longueur dite longueur active de communication $L_{ac}(P)$ (selon l'axe de défilement) nettement inférieure à la largeur $l_f$ de ladite fauchée (selon l'axe perpendiculaire au défilement).

On comprend que la durée de la fenêtre de communication est directement liée à la longueur de couverture par une antenne active du satellite.

Dans la partie précédente il a été décrit une amélioration du bilan de liaison entre un satellite défilant et un terminal utilisateur au sol. Cette amélioration était obtenue en réduisant la durée de communication possible avec chaque point $P$ au sol, lors de chaque orbite du satellite. Cette réduction de fenêtre de communication possible se fait tout en conservant une fauchée 55 large, de largeur prédéterminée $l_f$, cette largeur $l_f$ étant liée notamment aux caractéristiques de la constellation de satellites LEO (nombre de satellites défilants placés sur un même plan orbital, nombre de plans de la constellation, altitude des satellites).

Cette réduction de durée était obtenue, dans le mode de réalisation décrit plus haut à titre d'exemple non limitatif, par une réduction de la longueur $L$ de la trace au sol 54 du ou des faisceaux des antennes du satellite orientées vers le sol.

En d'autres termes, on comprend qu'un terminal utilisateur au sol voit un satellite défilant au dessus de lui pendant un temps de survol lié à l'altitude de l'orbite. Un tel temps de survol (passage d'un horizon à l'autre), est d'environ 13 minutes pour un satellite évoluant à une altitude de 680 km.

Par contre, dans l'invention telle que décrit plus haut à titre d'exemple, les antennes du satellite déterminent des faisceaux étroits, ne permettant réellement de communiquer avec le terminal utilisateur que pendant une fraction de ce temps de survol. Ce temps est de l'ordre de quelques dizaines de secondes à quelques minutes selon la configuration des faisceaux (zone de recouvrement et extension angulaire des faisceaux). Un tel temps est satisfaisant dans le cas d'un besoin de liaison intermittente uniquement.

Dans un autre mode de réalisation, la réduction de durée de communication possible avec chaque terminal utilisateur au sol est obtenue en utilisant un ensemble d'antennes installées sur le satellite pour les communications vers le sol, chacune de ces antenne n'étant allumée qu'une partie du temps.

L'invention porte alors sur un procédé de gestion de l'allumage et de l'extinction des faisceaux au cours du déplacement du satellite défilant.

Ce procédé peut s'appliquer aussi bien sur la voie d'émission que de réception mais il est important de souligner que la puissance consommée à bord d'un satellite défilant est nettement plus importante pour la transmission que pour la réception.

Le procédé selon l'invention comporte les étapes suivantes :

100. Choisir un faisceau à allumer

200. Effectuer les transmissions nécessaires pendant une période, appelée période d'allumage

300. Eteindre le faisceau

400. Revenir à l'étape 1

Dans l'étape 100, le choix d'un faisceau à allumer peut être réalisé soit de façon régulière, par exemple un tiers du temps pour chaque faisceau si le satellite dispose de trois antennes orientées vers le sol.

Alternativement, le choix d'un faisceau à allumer peut dépendre de la zone qui est survolée par le satellite, en privilégiant par exemple l'allumage de faisceaux couvrant une zone de terres plutôt qu'un faisceau couvrant une zone maritime.

Dans l'étape 200, il est à noter que la durée de la période d'allumage peut être soit fixe, soit variable selon un paramètre ou une combinaison de paramètres à définir.

Il est par exemple envisageable que la période d'allumage soit liée à des données pré-mémorisées de volume de communications constatée sur chaque zone au sol lors dune période antérieure.

Selon le procédé décrit ici à titre d'exemple, un seul faisceau est actif à la fois. Cette disposition présente l'avantage de concentrer la puissance dans une direction et d'offrir un bilan de liaison amélioré, à partir du budget de puissance limité de la plate-forme satellite défilant ou pour n'avoir à embarquer qu'un nombre réduit d'amplificateurs.

Ici encore, chaque point P au sol et donc chaque terminal utilisateur REC disposé sur la fauchée 55 du satellite défilant dispose d'au moins une fenêtre de communication avec le satellite défilant. La durée de cette fenêtre est cependant sensiblement inférieure à la durée théorique de survol du terminal utilisateur par le satellite défilant.

Ceci suffit pour satisfaire un besoin de communication intermittente, et permet un très bon bilan de liaison.

Ici encore, en chaque point P au sol de la fauchée 55 du satellite défilant, et à chaque orbite de celui-ci, la durée totale de couverture (selon l'axe de défilement) par au moins une antenne active du moyen de répétition défilant, détermine une longueur dite longueur active de communication $L_{ac}(P)$ (selon l'axe de défilement) nettement inférieure à la largeur $l_f$ de ladite fauchée 55 (selon l'axe perpendiculaire au défilement).

On comprend que la durée totale de communication peut être la somme de plusieurs durées en cas d'allumages successifs de l'antenne en vue du même point au sol. Dans ce cas, la longueur active de communication est la somme des longueurs actives de communication obtenues lors des allumages successifs d'antennes en vue du point $P$.

Dans les deux modes de réalisation décrits (par utilisation de plusieurs antennes formant une trace agrégée au sol plus large que longue, ou par allumage successif des antennes), à tout instant de l'orbite du satellite, une part seulement de la couverture sol théorique du satellite est effectivement accessible pour des communications.

## Avantages de l'invention

Grâce à la combinaison d'une constellation de satellites défilants LEO (qui permet de fournir un service plus performant aux régions polaires) et d'une constellation GEO (qui fournit un service de qualité aux régions équatoriales et aux basses latitudes), la durée moyenne de non visibilité d'un satellite pour un terminal utilisateur se trouve annulée ou fortement réduite par rapport aux systèmes de l'art antérieur, notamment lorsque de forts angles d'élévation sont recherchés (dans le cas des communications mobiles par satellite le facteur de blocage du signal est réduit à forte élévation ce qui conduit à une meilleure disponibilité du service).

On comprend qu'un système tel que décrit permet d'offrir une disponibilité nettement accrue (par le biais d'une couverture quasi-continue) pour les utilisateurs amenés à évoluer dans des zones reculées et peu couvertes par les systèmes de communications traditionnels. C'est le cas par exemple pour les zones polaires, par le biais d'une constellation en orbite polaire ou quasi-polaire).

En outre, l'agencement et la conformation des faisceaux, tels que décrits dans l'invention, permet d'accroître le bilan de liaison tout en réduisant significativement la complexité des plates-formes satellites LEO utilisées.

D'autres avantages de la solution retenue apparaissent particulièrement bien lorsqu'on la compare aux solutions existantes, utilisant soit des satellites en orbite basse, soit des satellites géostationnaires, soit des constellations hybrides.

1/ Comparé à une solution de communications par satellite employant une constellation de satellites en orbite basse, tels que Orbcomm (marque déposée) ou Argos (marque déposée) par exemple, les avantages procurés par l'invention sont multiples :

- Il n'est pas nécessaire de déployer de stations de connexion pour les communications entre les satellites en orbite basse LEO et l'infrastructure réseau terrestre. En effet, la station de connexion du ou des satellites GEO garantissent un accès permanent aux satellites en orbite basse LEO.
- Il n'est pas nécessaire de déployer des stations de Télécommande / Télémesure & Contrôle (TT&C) de la constellation de satellites en orbite basse, les signaux de TT&C étant également relayés par le ou les satellites GEO. On comprend que le contrôle des satellites en orbite basse est effectué, depuis le sol, par les stations de contrôle des satellites stationnaires, à travers ces satellites GEO.
- La conception des satellites en orbite basse est nettement simplifiée (fonction simplifiée de relais placée en orbite). Dans la présente invention, un effort supplémentaire de simplification de cette architecture a été apporté. Combiner l'accroissement de la directivité du signal au sol et la simplification des plates-formes de répéteurs spatiaux est avantageux.

2/ Comparé à une solution de communications par satellite employant un satellite géostationnaire, les avantages procurés par l'invention sont :

- Une extension de la couverture du satellite géostationnaire pour couvrir par exemple les zones polaires
- Une amélioration des performances du bilan de liaison permettant par exemple la miniaturisation des terminaux utilisateurs, la réduction de la puissance consommée par les terminaux (moins de puissance pour clore le bilan de liaison donc plus d'autonomie de batterie pour les terminaux opérant sur batteries) ou amélioration des débits et de la disponibilité
- Un temps de latence réduit pour l'accès au réseau et pour la réception d'accusé de réception.

3/ Comparé à un système (inclus dans l'état de la technique) de télécommunications par satellite hybride comprenant un ou plusieurs satellites géostationnaires et une constellation de satellites en orbite basse, les avantages procurés par l'invention sont :

- L'utilisation d'un protocole commun entre les deux systèmes, plus efficace que chaque protocole pris séparément.
- Une mutualisation de la bande de fréquence utilisée, avec des mécanismes assurant que les interférences intra-système sont limitées.

Du fait de sa conception, le concept est particulièrement adapté aux terminaux utilisateur ayant une faible directivité et ne nécessitant pas le maintien du pointage en direction des satellites en orbite basse. En effet, il suffit que le terminal utilisateur pointe vers un satellite GEO ou LEO pour assurer la communication.

Les applications envisagées concernent l'amélioration des futurs systèmes mobiles par satellites géostationnaires (MSS -Mobile Satellite Services-), incluant les services mobiles aéronautiques par satellites tels que AMSS (Aeronautical Mobile Satellite Service) et AMSRS (Aeronautical Mobile Satellite Route Services), en bande UHF, L, S, C ou X s'appuyant sur le déploiement d'une constellation en orbite basse beaucoup moins complexe que les constellations MSS existantes, telles que Globalstar (marque déposée) ou Iridium(marque déposée), pour des communications de type voix, données ou des échanges de messages de machine-à-machine (M2M).

Ce concept peut également s'appliquer aux systèmes de diffusion mobile par satellite de données, télévision ou radio (par exemple la diffusion radio au standard S-DAB utilisant une allocation BSS en bande L ou la diffusion de télévision mobile au standard DVB-SH utilisant une allocation MSS en bande S).

Une autre utilisation de ce concept concerne les échanges de données pour des applications de navigation (maritime ou aéronautique, notamment). Dans ces applications, connues de l'homme du métier sous le nom SBAS (de l'anglais "Satellite Based Augmentation System"), il n'existe pas actuellement de moyen de couvrir les terminaux mobiles situés au voisinage des pôles. L'invention permet de remédier à ce problème avec un satellite en orbite géostationnaire, et un satellite en orbite basse défilant en vue du mobile.

De même, à l'intérieur d'une zone de service d'un satellite géostationnaire il existe des zones d'ombre pour laquelle le satellite géostationnaire n'est pas en visibilité directe des terminaux de surface à cause de phénomènes de masquage par des bâtiments ou des éléments naturels (arbres, montagnes, ...). La couverture d'une zone d'ombre de ces dispositifs de communications traditionnels est éventuellement possible, dès lors que cette zone peut venir en vue d'un satellite défilant en orbite basse.

L'utilisation d'un système ou d'un procédé de télécommunications, conformes à l'invention permet donc d'étendre la zone de couverture de moyens de communication comportant des zones d'ombre, et notamment d'étendre la zone de couverture d'un système SBAS utilisant un satellite géostationnaire.

Dans le cas où le répéteur spatial transmet dans un canal adjacent à celui du satellite GEO et de façon régénérative, un atout de l'invention concerne la possibilité d'une éventuelle simplification des protocoles d'échanges entre les terminaux utilisateurs et les satellites LEO.

Les satellites LEO peuvent notamment réaliser une conversion vers un protocole d'échanges spécifique pour le GEO (pour tenir compte, par exemple, des contraintes de délai de propagation propres au GEO), ou une agrégation des messages et une optimisation de l'utilisation de la bande passante.

Un autre attrait important de ce concept est la possibilité d'avoir une liaison permanente et quasi temps réel entre le réseau de contrôle et de mission et la constellation de satellites LEO au travers de la station de connexion et du relais GEO.

On comprend par ailleurs que le système ne nécessite pas obligatoirement le déploiement d'une constellation de satellites LEO ou GEO dédiée. Il est en effet possible d'utiliser des capacités de transmission disponibles sur des constellations de satellites GEO déjà existantes.

On choisit dans ce cas naturellement la bande de fréquences de la constellation GEO utilisée comme bande de fréquence de travail des satellites LEO. Ceci permet de résoudre le problème du peu de bandes de fréquences disponibles pour les services mobiles par satellite utilisant des satellites non-géostationnaires, et cela offre donc un intérêt réglementaire pour le déploiement d'une constellation de satellites LEO opérant à titre secondaire dans la même bande fréquence que le (ou les) satellites GEO.

De même, les fonctions envisagées pour les satellites LEO peuvent en fait être réalisées au moyen des charges utiles embarquées comme passagers sur des satellites LEO dédiés principalement à d'autres fonctions. Dans ce cas, le critère déterminant est l'orbite envisagée pour le satellite LEO. Un choix avantageux est celui de satellites d'observation de la Terre, qui utilisent fréquemment une orbite héliosynchrone très inclinée, et couvrant donc les latitudes élevées.

Cette mise en oeuvre des charges utiles en tant que passagers, et naturellement très avantageuse en termes de coût de déploiement du système.

Le système décrit ici constitue donc une solution simple et économique en comparaison d'autres alternatives possibles telles que :

1. Le déploiement d'un grand nombre de stations sols pour offrir une connexion permanente entre les satellites LEO et le sol, qui est une solution coûteuse et complexe à implémenter en particulier pour couvrir les océans (la constellation Globalstar (marque déposée) est une bonne illustration de cette difficulté);
2. L'utilisation de liaisons inter-satellites pour offrir une connexion permanente entre les satellites LEO et un nombre limité de stations sols. Cette solution a l'inconvénient d'ajouter de la complexité et un surcoût au niveau du segment spatial (la constellation Iridium est une bonne illustration de cette solution).

Enfin, l'agencement et la conformation des faisceaux, tels que décrits dans l'invention, permet de réduire le coût du système et des terminaux et d'augmenter leurs performances :

• L'accroissement du bilan de liaison a pour effet de pouvoir augmenter la miniaturisation des terminaux et/ou de réduire leur puissance de transmission. On pourrait également profiter de cet accroissement du bilan de liaison pour augmenter les débits offerts par le système.
• La réduction significative de la complexité des plates-formes satellites défilants LEO utilisées permet de diminuer leur prix ou d'augmenter le nombre de satellites déployés dans le système.

Parmi d'autres avantages qui découlent de la forme du faisceau agrégé, on peut noter une réduction des émissions électromagnétiques au sol ainsi qu'une réduction de la capacité de brouillage.

**Variantes de l'invention**

Selon une variante du procédé, la séquence des faisceaux activés suit un balayage dans une direction avant de revenir au faisceau du début lorsque le dernier faisceau de la fauchée a été éteint.

Selon une autre variante du procédé, la suite des faisceaux activés suit une alternance entre le faisceau le plus large (couvrant l'angle de vue du satellite) et les faisceaux plus étroits. Ainsi, au-dessus des zones polaires il est possible d'utiliser le faisceau le plus large et dans le reste de la couverture des satellites géostationnaires d'utiliser la fauchée de faisceaux plus directifs.

**Revendications**

**1.** Système de télécommunications, destiné au transfert intermittent de données de et vers au moins un utilisateur situé sensiblement à la surface d'un corps céleste,
le système comprenant :

> au moins un terminal émetteur / récepteur REC de surface associé à chaque utilisateur,
> un ou plusieurs moyens de répétition de signaux pour des signaux émis et/ou reçus depuis les terminaux de surface REC, ces moyens de répétition défilant au dessus de la surface du corps céleste,
> chaque moyen de répétition défilant comportant au moins une antenne orientée vers la surface du corps céleste, et adaptée à permettre les communications de et vers des terminaux de surface REC, chaque antenne déterminant un faisceau d'émission / réception, dont la trace à la surface du corps céleste forme la trace au sol (54), le balayage progressif de la surface par cette trace au sol déterminant une bande dite fauchée,
> <u>caractérisé en ce que</u> le système comporte des moyens dits moyens de réduction de longueur de la trace active, adaptés à ce qu'en chaque point $P$ de la fauchée du moyen de répétition défilant, et à chaque passage de celui-ci, la durée totale de couverture par au moins une antenne active du moyen de répétition défilant, détermine une longueur $L_{ac}(P)$ selon la ligne de défilement dite longueur active de communication, dont la valeur moyenne $L_{ac}$ sur la largeur de la fauchée, soit nettement inférieure à la largeur $l_f$ selon un axe perpendiculaire à la ligne de défilement de ladite fauchée.

**2.** Système selon la revendication 1, **caractérisé en ce que** les moyens de réduction de la longueur de trace active comprenant, pour au moins un moyen de répétition défilant, des antennes orientées vers le sol, dont les faisceaux sont tels que la longueur au sol de chaque faisceau, égale à la longueur active de communication $L_{ac}$ dans ce cas, soit nettement inférieure à la largeur $l_f$ de la fauchée (selon l'axe perpendiculaire au défilement),

**3.** Système selon la revendication 2, **caractérisé en ce que** la trace au sol agrégée de l'ensemble des faisceaux d'émission / réception du moyen de répétition présente une longueur, mesurée selon la direction de défilement du moyen défilant, inférieure à sa largeur $l_f$, mesurée selon une direction perpendiculaire à la direction de défilement du moyen défilant.

**4.** Système de communication selon la revendication 3, **caractérisée en ce que** la largeur $l_f$ de la trace au sol agrégée est supérieure ou égale à trois fois la longueur de ladite trace au sol.

**5.** Système de communication selon l'une quelconque des revendications 2 à 4, **caractérisé en ce que** le moyen de répétition défilant comporte une antenne dont le faisceau forme une trace au sol elliptique de largeur $l_f$ nettement supérieure à sa longueur.

**6.** Système de communication selon l'une quelconque des revendications 2 à 4, **caractérisé en ce que** le moyen de répétition défilant comporte au moins deux antennes dont les faisceaux balayent des zones adjacentes de la fauchée, la trace au sol agrégée des traces de chaque faisceau présentant une largeur $l_f$ nettement supérieure à sa longueur.

**7.** Système de communication selon la revendication 1, **caractérisé en ce que** les moyens de réduction de la longueur de trace active comprennent pour au moins un moyen de répétition, au moins deux antennes destinées à des communications vers le sol, et des moyens d'allumage intermittent de chacune de ces antennes.

**8.** Procédé d'utilisation d'un système de télécommunications selon la revendication 7, ledit procédé étant destiné au transfert de données intermittent de et vers au moins un utilisateur, situé sensiblement à la surface d'un corps céleste, l'utilisateur étant doté d'un terminal utilisateur, en vue d'au moins un moyen de répétition défilant au dessus de la surface du corps céleste,
le procédé comprenant de façon itérative des étapes suivantes :

100. choix d'au moins une antenne à allumer,
200. transmission de ou vers le terminal utilisateur pendant une période, appelée période d'allumage,
300. extinction d'au moins une antenne.

**9.** Procédé de télécommunication selon la revendication 8, **caractérisé en ce que**, dans l'étape 100, le choix d'un faisceau à allumer est réalisé de façon régulière, pendant un temps proportionnel au nombre d'antennes orientées vers le sol.

**10.** Procédé de télécommunication selon la revendication 8, **caractérisé en ce que**, dans l'étape 100, le choix d'un faisceau à allumer dépend de la zone qui est survolée par le satellite, selon une logique prédéterminée dépendant du type de zone survolée.

**11.** Procédé de télécommunication selon l'une quelconque des revendications 8 à 10, **caractérisé en ce que**, dans l'étape 200, la durée de la période d'allumage varie selon un critère prédéterminé.

**12.** Procédé de télécommunication selon la revendication 11, **caractérisé en ce que**, la période d'allumage est liée à des données pré-mémorisées de volume de communications constatée sur chaque zone au sol lors d'une période antérieure.

**13.** Procédé de télécommunication selon l'une quelconque des revendications 8 à 12, **caractérisé en ce que**, dans l'étape 200, une seule antenne est allumée à la fois.

**14.** Procédé de télécommunication selon l'une quelconque des revendications 8 à 13, **caractérisé en ce que** la séquence des antennes activées suit un balayage dans une direction prédéterminée avant de revenir à l'antenne du début lorsque la dernière antenne de la fauchée a été allumée.

**15.** Procédé de télécommunication selon l'une quelconque des revendications 8 à 13, **caractérisé en ce que**, la suite des antennes activées suit une alternance entre une antenne large couvrant tout l'angle de vue du satellite et des antennes déterminant des faisceaux plus étroits.

**16.** Procédé de télécommunication selon l'une quelconque des revendications 8 à 15, **caractérisé en ce qu'**il comporte une étape dans laquelle, lorsque le moyen de répétition défilant est situé au-dessus des zones polaires du corps céleste, on utilise le faisceau le plus large et dans le reste de trajet du moyen de répétition défilant, on utilise les antennes déterminant des faisceaux plus étroits.

## Patentansprüche

**1.** Telekommunikationssystem, das für den intermittierenden Datentransfer von und zu mindestens einem Benutzer, der sich im Wesentlichen an der Oberfläche eines Himmelskörpers befindet, bestimmt ist, wobei das System Folgendes umfasst:

mindestens ein Sender-/Empfänger-Oberflächenendgerät REC, das mit jedem Benutzer assoziiert ist, ein oder mehrere Mittel zum Wiederholen von Signalen für Signale, die ausgehend von den Oberflächenendgeräten REC gesendet und/oder empfangen werden, wobei diese Wiederholungsmittel oberhalb der Oberfläche des Himmelskörpers vorbeilaufen, wobei jedes vorbeilaufende Wiederholungsmittel mindestens eine Antenne umfasst, die zu der Oberfläche des Himmelskörpers gerichtet und angepasst ist, um die Kommunikationen von und zu den Oberflächenendgeräten REC zu erlauben, wobei jede Antenne einen Sende-/Empfangsstrahl bestimmt, dessen Spur auf der Oberfläche des Himmelskörpers die Spur auf dem Boden (54) bildet, wobei das allmähliche Abtasten der Oberfläche durch diese Spur auf dem Boden ein Band, das Schwadenband genannt wird, bestimmt, **dadurch gekennzeichnet, dass** das System Mittel, die Längenverringerungsmittel der aktiven Spur genannt werden, umfasst, die angepasst sind, damit in jedem Punkt P des Schwadens des vorbeilaufenden Wiederholungsmittels und bei jedem Durchgang dieses die Gesamtdeckungsdauer durch mindestens eine aktive Antenne des vorbeilaufenden Wiederholungsmittels eine Länge $L_{ac}(P)$ gemäß der Vorbeilauflinie, die aktive Kommunikationslänge genannt wird, bestimmt, deren Mittelwert $L_{ac}$ auf der Breite des Schwadens deutlich geringer ist als die Breite $l_f$ gemäß einer Achse senkrecht zu der Vorbeilauflinie des Schwadens.

2.  System nach Anspruch 1, **dadurch gekennzeichnet, dass** die Verringerungsmittel der Länge der aktiven Spur für mindestens ein vorbeilaufendes Wiederholungsmittel Antennen umfassen, die zu dem Boden ausgerichtet sind, deren Strahlen derart sind, dass die Länge auf dem Boden jedes Strahls gleich der aktiven Kommunikationslänge $L_{ac}$ in diesem Fall deutlich kleiner ist als die Breite $l_f$ des Schwadens (entlang der Achse senkrecht zum Vorbeilaufen).

3.  System nach Anspruch 2, **dadurch gekennzeichnet, dass** die aggregierte Spur auf dem Boden der Einheit der Sende-/Empfangsstrahlen des Wiederholungsmittels eine Länge entlang der Vorbeilaufrichtung des vorbeilaufenden Mittels gemessen aufweist, die kleiner ist als ihre Breite $l_f$ entlang einer Richtung senkrecht zu der Vorbeilaufrichtung des vorbeilaufenden Mittels gemessen.

4.  Kommunikationssystem nach Anspruch 3, **dadurch gekennzeichnet, dass** die Breite $l_f$ der aggregierten Spur auf dem Boden größer oder gleich drei Mal der Länge der Spur auf dem Boden ist.

5.  Kommunikationssystem nach einem der Ansprüche 2 bis 4, **dadurch gekennzeichnet, dass** das vorbeilaufende Wiederholungsmittel eine Antenne umfasst, deren Strahl eine elliptische Spur auf dem Boden mit Breite $l_f$ bildet, die deutlich größer ist als ihre Länge.

6.  Kommunikationssystem nach einem der Ansprüche 2 bis 4, **dadurch gekennzeichnet, dass** das vorbeilaufende Wiederholungsmittel mindestens zwei Antennen umfasst, deren Strahlen benachbarte Zonen des Schwadens abtasten, wobei die aggregierte Spur auf dem Boden der Spuren jedes Strahls eine Breite $l_f$ aufweist, die deutlich größer ist als ihre Länge.

7.  Kommunikationssystem nach Anspruch 1, **dadurch gekennzeichnet, dass** die Verringerungsmittel der Länge der aktiven Spur für mindestens ein Wiederholungsmittel mindestens zwei Antennen umfassen, die für Kommunikationen zu dem Boden bestimmt sind, und Mittel zum intermittierenden Einschalten jeder dieser Antennen.

8.  Verfahren für den Gebrauch eines Telekommunikationssystems nach Anspruch 7, wobei das Verfahren für den intermittierenden Datentransfer von und zu mindestens einem Benutzer, der sich im Wesentlichen an der Oberfläche eines Himmelskörpers befindet, bestimmt ist, wobei der Benutzer mit einem Benutzerendgerät versehen ist, im Blick mindestens eines Wiederholungsmittels, das oberhalb der Oberfläche des Himmelskörpers vorbeiläuft,
    wobei das Verfahren iterativ die folgenden Schritte umfasst:

    100. Auswahl mindestens einer einzuschaltenden Antenne,
    200. Übertragen zu oder von dem Benutzerendgerät während einer Periode, die Einschaltperiode genannt wird,
    300. Ausschalten mindestens einer Antenne.

9.  Telekommunikationsverfahren nach Anspruch 8, **dadurch gekennzeichnet, dass** die Auswahl eines einzuschaltenden Strahls bei dem Schritt 100 regelmäßig während einer Zeit anteilsmäßig zu der Anzahl von Antennen, die zu dem Boden gerichtet sind, ausgeführt wird.

10. Telekommunikationsverfahren nach Anspruch 8, **dadurch gekennzeichnet, dass** bei dem Schritt 100 die Auswahl eines einzuschaltenden Strahls von der Zone, die von dem Satelliten überflogen wird, gemäß einer vorbestimmten Logik, die von dem Typ der überflogenen Zone abhängt, abhängt.

11. Telekommunikationsverfahren nach einem der Ansprüche 8 bis 10, **dadurch gekennzeichnet, dass** bei dem Schritt 200 die Dauer der Einschaltperiode gemäß einem vorbestimmten Kriterium variiert.

12. Telekommunikationsverfahren nach Anspruch 11, **dadurch gekennzeichnet, dass** die Einschaltperiode mit vorab gespeicherten Kommunikationsvolumendaten, die auf jeder Zone auf dem Boden bei einer vorhergehenden Periode festgestellt wird, verknüpft ist.

13. Telekommunikationsverfahren nach einem der Ansprüche 8 bis 12, **dadurch gekennzeichnet, dass** bei dem Schritt 200 eine einzige Antenne auf einmal eingeschaltet wird.

14. Telekommunikationsverfahren nach einem der Ansprüche 8 bis 13, **dadurch gekennzeichnet, dass** die Abfolge der aktivierten Antennen einem Abtasten in eine vorbestimmte Richtung entspricht, bevor sie zu der Antenne des Anfangs zurückkehrt, wenn die letzte Antenne des Schwadens eingeschaltet wurde.

**15.** Telekommunikationsverfahren nach einem der Ansprüche 8 bis 13, **dadurch gekennzeichnet, dass** die Abfolge der aktivierten Antennen einem Wechsel zwischen einer großen Antenne, die den gesamten Blickwinkel des Satelliten deckt, und Antennen, die schmalere Strahlen bestimmen, folgt.

**16.** Telekommunikationsverfahren nach einem der Ansprüche 8 bis 15, **dadurch gekennzeichnet, dass** es einen Schritt umfasst, bei dem man, wenn das vorbeilaufende Wiederholungsmittel oberhalb der Polzonen des Himmelskörpers ist, den breitesten Strahl verwendet, und in dem Rest der Bahn des vorbeilaufenden Wiederholungsmittels die Antennen verwendet, die die schmalsten Strahlen bestimmen.

**Claims**

**1.** Telecommunications system intended for intermittent data transfer from and to at least one user located substantially on the surface of a celestial body,
the system comprising:

at least one surface transmitter/receiver terminal REC associated with each user,
one or more signal repeater means for the signals transmitted and/or received from the surface terminals REC, these repeater means moving above the surface of the celestial body,
each moving repeater means having at least one antenna oriented toward the surface of the celestial body, and adapted to allow communications from and to surface terminals REC, each antenna producing a transmission / reception beam, the track of which on the surface of the celestial body forms the ground track (54), the progressive sweeping of the surface by this ground track forming a strip called a swath,
**characterized in that** the system has means referred to as active track length reduction means, adapted to ensure that, at each point P of the swath of the moving repeater means, and on each pass of the latter, the total coverage time by at least one active antenna of the moving repeater means determines a length $L_{ac}(P)$ along the line of movement called the active communication length, whose mean value $L_{ac}$ over the width of the swath is markedly smaller than the width $l_f$ along an axis perpendicular to the line of movement of said swath.

**2.** System according to Claim 1, **characterized in that** the active track length reduction means comprise, for at least one moving repeater means, antennas oriented toward the ground, the beams of which are such that the length of each beam on the ground, equal to the active communication length $L_{ac}$ in this case, is markedly smaller than the width $l_f$ of the swath (along the axis perpendicular to the movement).

**3.** System according to Claim 2, **characterized in that** the aggregate ground track of the set of transmission / reception beams of the repeater means has a length, measured in the direction of movement of the moving means, which is less than its width $l_f$, measured in a direction perpendicular to the direction of movement of the moving means.

**4.** Communications system according to Claim 3, **characterized in that** the width $l_f$ of the aggregate ground track is greater than or equal to three times the length of said ground track.

**5.** Communications system according to any of Claims 2 to 4, **characterized in that** the moving repeater means has an antenna whose beam forms an elliptical ground track having a width $l_f$ considerably greater than its length.

**6.** Communications system according to any of Claims 2 to 4, **characterized in that** the moving repeater means has at least two antennas whose beams sweep adjacent areas of the swath, the aggregate ground track of the tracks of each beam having a width $l_f$ considerably greater than its length.

**7.** Communications system according to Claim 1, **characterized in that** the active track length reduction means comprise, for at least one repeater means, at least two antennas intended for communications toward the ground, and means for intermittently energizing each of these antennas.

**8.** Method of using a telecommunications system according to Claim 7, said method being intended for intermittent data transfer from and toward at least one user located substantially on the surface of a celestial body, the user being provided with a user terminal, in view of at least one repeater means moving above the surface of the celestial body,
the method comprising, in an iterative manner, the following steps:

    100. choosing at least one antenna to be energized,
    200. transmitting from or toward the user terminal during a period called the energizing period,
    300. de-energizing at least one antenna.

**9.** Telecommunications method according to Claim 8, **characterized in that**, in step 100, the choice of a beam to be energized is made in a regular manner during a time proportional to the number of antennas oriented toward the ground.

**10.** Telecommunications method according to Claim 8, **characterized in that**, in step 100, the choice of a beam to be energized depends on the area being overflown by the satellite, according to a predetermined logic which is dependent on the type of area overflown.

**11.** Telecommunications method according to any of Claims 8 to 10, **characterized in that**, in step 200, the duration of the energizing period varies according to a predetermined criterion.

**12.** Telecommunications method according to Claim 11, **characterized in that** the energizing period is related to previously stored data on the communications volume detected in each area on the ground during a previous period.

**13.** Telecommunications method according to any of Claims 8 to 12, **characterized in that**, in step 200, only one antenna is energized at a time.

**14.** Telecommunications method according to any of Claims 8 to 13, **characterized in that** the sequence of activated antennas follows a sweep in a predetermined direction before returning to the starting antenna when the last antenna of the swath has been energized.

**15.** Telecommunications method according to any of Claims 8 to 13, **characterized in that** the sequence of activated antennas alternates between a wide antenna covering the whole angle of view of the satellite and antennas providing narrower beams.

**16.** Telecommunications method according to any of Claims 8 to 15, **characterized in that** it includes a step in which the widest beam is used when the moving repeater means is located above the polar areas of the celestial body, while the antennas providing narrower beams are used in the rest of the trajectory of the moving repeater means.

Fig. 1

Fig. 2

| Elévation moyenne | 5° | 5° | 5° | 5° | 5° |
|---|---|---|---|---|---|
| Altitude Satellite LEO | 1100 Km | 800 Km | 600 Km | 500 Km | 400 Km |
| Rayon Terre | 6378 Km | 6378 Km | 6378 Km | 6378 Km | 6378 Km |
| Demi-angle de vue Satellite | 58,17 ° | 62,27 ° | 65,58 ° | 67,48 ° | 69,62 ° |
| Rayon de couv. À élévation moyenne | 1772 Km | 1522 Km | 1321 Km | 1206 Km | 1077 Km |
| Délai maximum Entre signaux GEO/LEO | 7,0 ms | 5,7 ms | 4,8 ms | 4,4 ms | 3,8 ms |

# Fig. 3

Fig. 4

52 Déplacement satellite

50'  Déplacement satellite suivant

55

50

55'

51' 52'

53

Faisceau aplati

54

Angle de vue d'un satellite LEO

51

54'

**Fig. 5**

$\ell_f$

Déplacement satellite

Déplacement satellite suivant

$L_{ac}(P)$

P

54a

54b

54c

54

Angle de vue d'un satellite LEO

**Fig. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2764755
- US 6208625 B
- EP 0883252 A
- US 6339707 B
- EP 771085 A
- US 6252562 B1